# EUROPEAN PATENT SPECIFICATION

(11) **EP 3 009 649 B1**
(45) Date of publication and mention of the grant of the patent: **30.12.2020**
(21) Application number: 15189191.8
(22) Date of filing: 09.10.2015
(51) Int. Cl.: F02K 3/06, F01D 25/28, F01D 25/16

(54) **INTEGRATED OUTER FLOWPATH DUCTING AND FRONT FRAME SYSTEM FOR USE IN A TURBOFAN ENGINE AND METHOD FOR MAKING SAME**
INTEGRIERTER ÄUSSERER STRÖMUNGSWEGKANAL UND VORDERRAHMENSYSTEM ZUR VERWENDUNG IN EINEM MANTELSTROM-TRIEBWERK UND VERFAHREN ZUR HERSTELLUNG DAVON
CONDUITE D'ÉCOULEMENT EXTERNE INTÉGRÉE ET SYSTÈME DE CADRE AVANT DESTINÉ À ÊTRE UTILISÉ DANS UN MOTEUR À TURBORÉACTEUR ET SON PROCÉDÉ DE FABRICATION

(30) Priority: 16.10.2014 US 201414516270
(43) Date of publication of application: 20.04.2016
(73) Proprietor: Honeywell International Inc., Morris Plains, NJ 07950 (US)
(72) Inventor: MICKELSEN, Justin C., Morris Plains, NJ New Jersey 07950 (US); LISTON, Laurence David Noble, Morris Plains, NJ New Jersey 07950 (US); KNOWLES, Mark, Morris Plains, NJ New Jersey 07950 (US); ALSTAD, Shawn, Morris Plains, NJ New Jersey 07950 (US)
(74) Representative: Houghton, Mark Phillip

(56) References cited:
- FR-A1- 2 940 359
- GB-A- 2 242 711
- US-A- 5 160 251
- US-A1- 2007 068 136
- US-A1- 2010 077 721

## Description

### TECHNICAL FIELD

The present invention generally relates to turbofan engines, and more particularly relates to the outer flowpath ducting and front frame system of a turbofan engine and method for making same.

### BACKGROUND

Aircraft engine competitiveness is influenced by numerous engine attributes. One of the most salient engine attributes is the maximum thrust-to-weight ratio that is offered by an aircraft turbofan engine while remaining safely mounted to the aircraft and providing safe operation. The thrust-to-weight ratio can be improved by reducing the overall weight without affecting the engine thrust. Thus, aircraft turbofan engine competitiveness may be improved by reducing overall aircraft engine weight, which is impacted by factors such as the number of assembly interfaces in the engine, the number of components/parts that go into the engine, and the way in which loads are distributed throughout the engine.

Patent document number GB2242711A describes a hub and a radially spaced casing which are connected by two rows of circumferentially spaced tie rods. The tie rods are pretensioned by nuts so that thermal expansion of the tie rods is accommodated by the pre-tension. Nuts fix the tie rods to the hub and casing so that the rods transfer loads to the casing. Fairings enclosing the tie rods have portions along their length engaging the rods and providing lateral support. Another prior art document is US 2010/077721 A1, which discloses a turbofan composite fan case, comprising a fan containment structure which is placed between an inner and an outer composite shell.

An aerodynamically streamlined aircraft turbofan engine is typically comprised of multiple components coupled via multiple stages of assembly interfaces to form an inlet inner barrel, engine fan housing, front frame, and bypass structure, that surrounds the bulk of the aircraft engine core. Reducing part count and/or using lightweight materials in any of the aircraft turbofan engine stages may result in a reduction of the overall weight of the aircraft turbofan engine.

Among the aforementioned stages, the aircraft engine front frame is typically a relatively high weight and expensive-to-manufacture component that must satisfy multiple criteria. The aircraft engine front frame is required to support/transfer the mechanical loads between the engine core and the airframe, and is also the primary structure that supports the engine core and the gearbox. Further, the aircraft engine front frame is the mechanism configured to aerodynamically force the airflow into either the core of the engine or allow the airflow to bypass the core and enter into the bypass flowpath formed by outer flowpath ducting. Therefore, reducing the weight of the aircraft engine front frame and outer flowpath ducting would significantly impact overall aircraft engine weight and improve aircraft engine competitiveness.

Accordingly, it would be desirable to provide an integrated outer flowpath ducting and front frame system and method for an aircraft turbofan engine that minimizes assembly interfaces and reduces overall aircraft engine weight. It would be further desirable to provide an integrated outer flowpath ducting and front frame system and method for a turbofan engine that minimizes assembly interfaces and enables efficient distribution of mechanical load.

### BRIEF SUMMARY

The present invention in all its aspects is as set out in the appended claims.

This summary is provided to introduce a selection of concepts in a simplified form that are further described below in the Detailed Description section. This summary is not intended to identify key features or essential features of the claimed subject matter, nor is it intended to be used as an aid in determining the scope of the claimed subject matter.

In view of the foregoing, an outer flowpath ducting and front frame system in a turbofan engine, according to claim 1, is provided.

Another outer flowpath ducting and front frame system in a turbofan engine is provided. The engine outer flowpath ducting and front frame system comprises a primary composite load path circumferentially surrounding an engine centerline and defining the outer flowpath and a front frame assembly centered within the primary composite load path. The front frame assembly comprises a metallic hub, a first number of aerodynamically configured fairings coupled to the metallic hub and extending radially to the primary composite load path, and the first number of load-bearing metal struts, each load-bearing strut coupled on a first end to the metallic hub and coupled on the second end to the primary composite load path.

Also provided is a method for reducing turbofan engine weight in a turbofan engine having outer flowpath ducting, according to claim 7.

Other desirable features and advantages will become apparent from the following detailed description and the appended claims, taken in conjunction with the accompanying drawings and this background.

### BRIEF DESCRIPTION OF THE DRAWINGS

A more complete understanding of the subject matter may be derived by referring to the following Detailed Description and Claims when considered in conjunction with the following figures, wherein like reference numerals refer to similar elements throughout the figures, and wherein:
FIG. 1 is a front view of a traditional aircraft turbofan engine;
FIG. 2 is side view of the traditional aircraft turbofan engine shown in FIG. 1;
FIG. 3 is a longitudinal cross-sectional view of a front portion of a turbofan engine in accordance with the present invention;
FIG. 4 is a three dimensional view of a composite fairing structure, in accordance with the present invention;
FIG. 5 is a three dimensional view of a metallic hub, configured to be coupled to the exemplary fairing structure of FIG. 4, in accordance with the present invention;
FIG. 6 is a three dimensional view showing the composite fairing structure of FIG. 4 coupled to the metallic hub of FIG. 5, in accordance with the present invention;
FIG. 7 is a three dimensional view of a front frame assembly in accordance with the present invention; and
FIG. 8 is a three dimensional view showing a load housing coupled to the components comprising the circular front frame assembly in accordance with the present invention.

### DETAILED DESCRIPTION

The following Detailed Description is merely exemplary in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over any other implementations. Furthermore, there is no intention to be bound by any expressed or implied theory presented in the preceding Technical Field, Background, Brief Summary or the following Detailed Description.

For the sake of brevity, functional aspects of various turbofan engine systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The following descriptions may refer to elements or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Various embodiments are directed to an integrated aircraft turbofan engine outer flowpath ducting and front frame system, and methods for producing the same. The embodiments described herein are merely an example and serve as a guide for implementing the novel systems and method herein on any industrial, commercial, or consumer turbofan application. As such, the examples presented herein are intended as non-limiting.

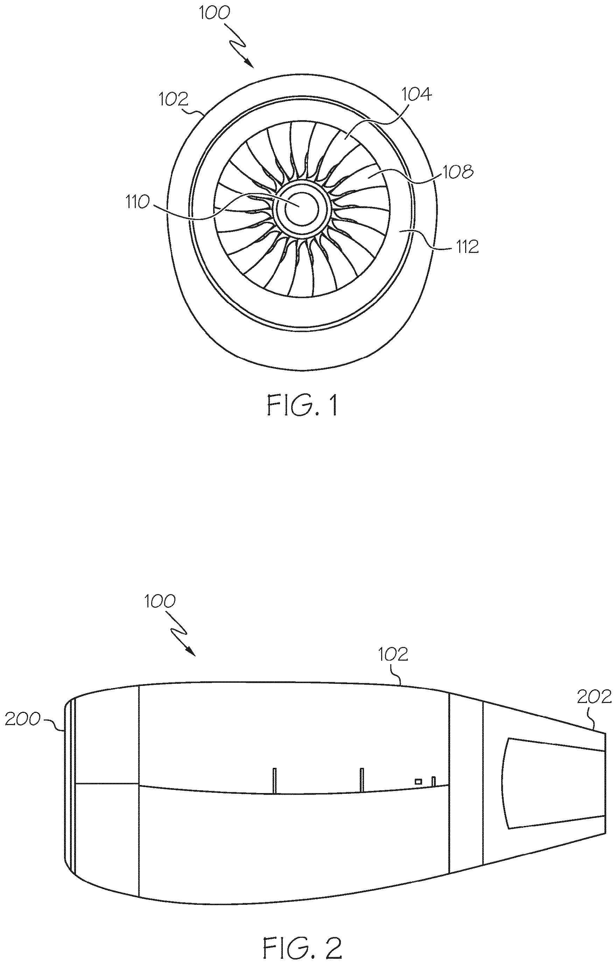

FIGS. 1 and 2 are front and side views, respectively, of a traditional aircraft turbofan engine **100.** The turbofan engine **100** is a component of an aircraft's propulsion system. It includes an aerodynamically smooth outer covering referred to as the nacelle cowling **102** that wraps around and substantially encases the turbofan engine, wider at the front or inlet end **200** of the turbofan engine and narrower at the back or exhaust end **202** of the turbofan engine. The engine fan assembly **104** includes a plurality of fan blades **108** that are independently or integrally attached to, and extend radially out from, a fan rotor hub **110** centered within inlet cavity **112.**

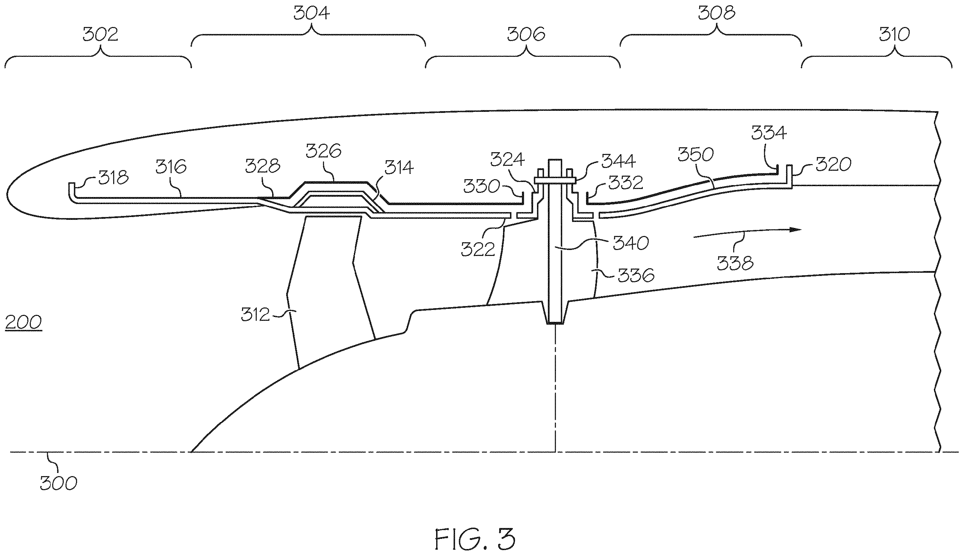

FIG. 3 is a longitudinal cross-sectional view of a front portion of a turbofan engine in accordance with an exemplary embodiment. Only the upper half of the engine, delineated by engine centerline **300,** is shown for clarity. As can be seen, the nacelle cowling **102** shown in FIG. 2 comprises a number of separate regions including inlet inner barrel **302,** fan containment **304,** front frame **306,** forward bypass **308** and aft bypass **310.** The regions making up the nacelle cowling **102** are not shown to scale in FIG. 3, and it is to be understood that some turbofan systems and components may have been omitted for simplification. The engine fan assembly **104** of FIG. 1, including fan rotor hub **110** and a plurality of fan blades **108** (only one of which is shown, blade **312** in FIG. 3), is positioned for rotation such that the tips of fan blades **108** are accommodated within a fan containment structure **314** that is positioned circumferentially around fan rotor hub **110** to protect the aircraft from damage by the fan blades **108.**

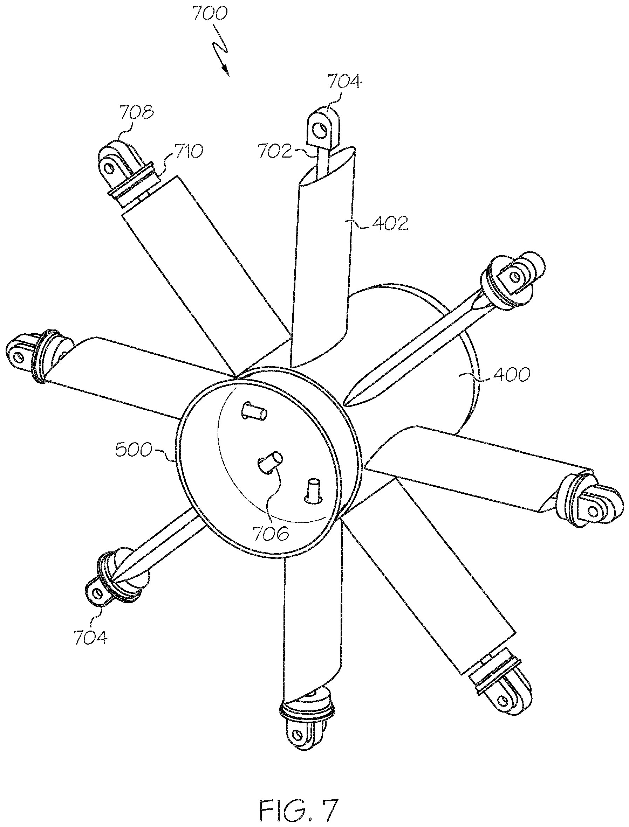

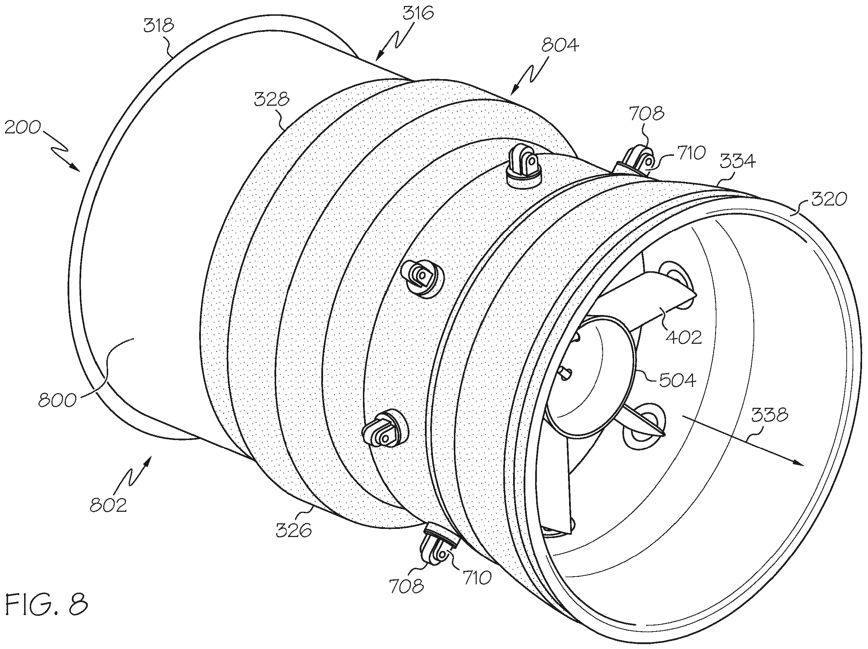

In the exemplary embodiment, a load housing defines the outer flowpath ducting in the turbofan engine. The load housing comprises primary composite load path **316,** which extends from substantially the inlet inner barrel **302** at flange **318** (at the forward or inlet side) to the aft bypass **310,** at flange **320** (at the aft side). The primary composite load path **316** provides structural support for distributing weight and inertial loads induced by aircraft flight maneuvers when coupled to weight bearing struts in a front frame assembly (see, FIGs 7 and 8). A plurality of openings **322** are distributed radially around the primary composite load path and a mount pad **324** is aligned with each opening **322.** Coupling the mount pad **324** to the load housing may be accomplished by various means, for example, screws, bolts, fasteners, and the like, and may also employ compliant/elastomeric materials. In the exemplary embodiment, the primary composite load path **316** is continuous from flange **318** to flange **320.**

A secondary composite load path **326** extends from a forward side **328** of the fan containment structure **314** to flange **330** at mount pad **324,** and extends from flange **332** at the aft side of mount pad **324** to flange **334.** The secondary composite load path **326** is coupled to the primary composite load path **316,** and is coupled to mount pad **324.** In the exemplary embodiment, the secondary composite load path is continuous from forward side **328** to flange **334;** having openings to receive mount pads such as mount pad **324.** Flanges **330, 332** and **334** are typically circumferentially continuous around the load housing.

In another embodiment with a shorter load housing, the primary composite load path **316** extends from the inlet inner barrel at flange **318** to the aft side of the openings, such as opening **322,** typically at flange **332,** where it may be coupled to the mount pad **324.** In this embodiment, segment **350** of the primary composite load path **316** (extending from the flange **332** to flange **320**) is omitted, as is the associated secondary composite load path in this region. This alternative embodiment may offer simplified engine assembly and maintenance options in regard to access to the engine core in the region of segment **350,** and may increase overall engine weight by requiring additional assembly features such as flanges, piloting features, alignment pins, fasteners and the like.

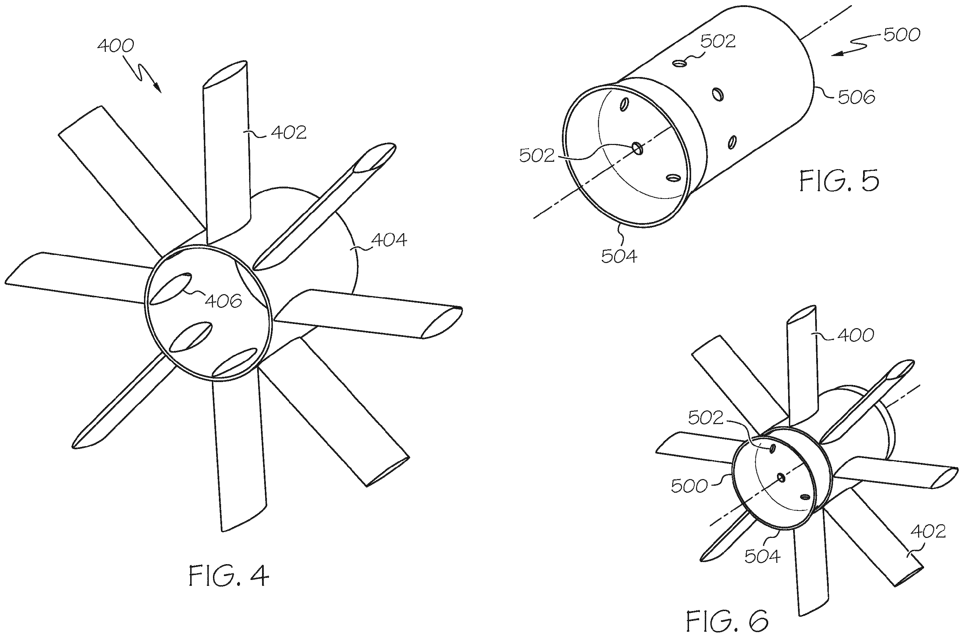

An exemplary fairing **336,** disposed between primary composite load path **316** and a hub centered on the engine centerline **300,** is aerodynamically configured to direct air through the outer flowpath **338** while also providing an internal hollow cavity allowing the pass-through of a load-bearing metallic strut **340.** An associated inner flowpath is defined by the hub. Fairings are comprised of a lightweight composite material, and are not load-bearing. The transfer of mechanical loads between the engine core and the airframe is accomplished via load-bearing metallic struts. In FIG. 3, a load-bearing strut **340** is shown extending from substantially the engine centerline **300** through fairing **336** and through mount pad **324,** however, as is described in more detail in connection with FIG. 7, load-bearing metallic struts extend radially from a metallic core (see, for example, hub **500** in FIG. 5) that surrounds the engine shaft or centerline and the inner flowpath. Load-bearing strut **340** is shown coupled via a fastener **344** to the mount pad **324.** The fairing **336** and load-bearing strut **340** are components of an exemplary embodiment of a circular front frame assembly that is described in more detail in connection with FIGs 4, 5, 6 and 7.

FIG. 4 is a three dimensional view of a fairing structure **400** in accordance with the exemplary embodiment. Fairing structure **400** is comprised of a plurality of aerodynamically configured composite fairings **402** (see also FIG. 3 **336**) extending radially from a hub **404.** In the exemplary embodiment, each fairing is hollow, and the fairing structure **400** is oriented such that each fairing is aligned with an opening **406** in the hub **404.** The shape, orientation and number of fairings are determined by aerodynamic considerations, in order to direct airflow through the outer flowpath **338,** defined in part by an inner surface of the load housing (see, primary composite load path **316** of FIG. 3). Advantageously, the composite fairing material and shape may be aerodynamically determined, because the fairings themselves do not have weight bearing duties in the exemplary embodiment. As previously mentioned, load-bearing metallic struts are used for transfer of mechanical loads (load-bearing) and may be inserted through the hollow of each fairing. Decoupling the fairing/aerodynamic duties from the struts/weight bearing duties as provided by the exemplary embodiment enables efficient weight and cost improvement in the turbofan engine outer flowpath ducting and front frame system. The exemplary embodiment optimizes cost and safety because having a simpler load-bearing composite outer flowpath/primary load path that is not integrated with the fairings and hub is much easier to accomplish and reduces manufacturing/inspection details. Relying on simple structural features as described in this embodiment is also easier than relying on the traditional metallic casting that is more prone to defects.

FIG. 5 is a three dimensional view of a metallic hub **500,** configured to be coupled to the fairing structure of FIG. 4, in accordance with the exemplary embodiment. Metallic hub **500** is configured to couple around an engine shaft along the engine centerline **300,** and the composite fairing hub **404** is configured to couple circumferentially around metallic hub **500.** Metallic hub **500** has a plurality of radially aligned openings **502.** In the exemplary embodiment, the aft side **504** of metallic hub **500** has a wider opening than the forward side **506,** in order to accommodate an associated increase in the size of the engine core in this region.

FIG. 6 is a three dimensional view showing composite fairing structure **400** coupled to metallic hub **500** in accordance with an exemplary embodiment. In the exemplary embodiment, there is a one to one correspondence between the number of openings **502** and the number of fairings **402,** and each hollow fairing **402** is aligned with an opening **502** in the metallic hub **500.** Likewise, the number of fairings, the number of load-bearing metallic struts, the number of openings in the load housing, and the number of mount pads are equal. For simplifying purposes, the number of these components is referred to as the first number.

Although not shown, mount pads may have additional features for mounting to the aircraft beyond the described features that couple the engine core to the load housing. Notably, all of the mount pad features, in combination with the fastening heads on the ends of each the load-bearing metallic struts may be attachments for mounting to the aircraft regardless of a left hand, a right hand, or a center engine installed empennage-mounted propulsion system. Likewise, the provided system and method are operable for under or over wing attachment engine installation.

FIG. 7 is a three dimensional view of a front frame assembly **700,** in accordance with the exemplary embodiment. The composite fairing structure **400** is shown coupled to metallic hub **500.** Fairings **402** are shown with load-bearing metallic struts **702** (see also FIG. 3 **340**) extending radially from a first end **706** that is radially inward from a second end **704.** Second end **704** is shown having a fastening head **708,** configured to couple to a mount pad **710.** As with the coupling of other components, coupling the fairings **402** and mount pads **710** may be accomplished by various means, for example, screws, bolts, fasteners, and the like, and may also employ compliant/elastomeric materials. The mount pad **710** is described in more detail in connection with FIG. 8.

FIG. 8 is a three dimensional view showing the load housing **800** coupled to the components comprising the circular front frame assembly **700** of FIG. 7, according to the exemplary embodiment. As previously described, the load housing **800** comprises the primary composite load path **316** and the secondary composite load path **326.** A fan assembly **104** is occluded from this view, but is positioned inside the load housing near the fan containment structure **804.**

As described in connection with FIG. 3, when the exemplary integrated aircraft turbofan engine outer flowpath ducting and front frame system is employed in an aircraft turbofan engine system, the primary composite load path extends from flange **318** located at substantially the inlet end **200** to flange **320,** located substantially at the aft bypass **310.** In contrast, secondary composite load path **326** extends from forward side **328** to flange **334.** Airflow follows outer flowpath **338,** as directed by the fairings **402,** disposed around metallic hub **504.** Fastening heads **708** of load-bearing metallic struts are visible. Mount pads **710** are shown bisecting the primary and secondary composite load paths. It is readily apparent that fastening heads **708** of metal struts **702** are oriented for coupling the circular front frame assembly to the composite load housing.

When the load housing is securely coupled via the mount pads **710** to the front frame assembly **700,** the weight bearing metal struts **702** transfer mechanical loads between the metallic hub and the load housing, and the exemplary embodiment provides an integrated outer flowpath ducting and front frame system for a turbofan engine that minimizes assembly interfaces and optimizes weight.

Thus, there has been provided a system and method for an integrated aircraft turbofan engine outer flowpath ducting and front frame system and method that minimizes assembly interfaces and reduces overall aircraft engine weight. The exemplary embodiment provides an integrated turbofan engine outer flowpath ducting and front frame system that decouples the fairing/aerodynamic duties from the struts/weight bearing duties thereby enabling efficient distribution of mechanical load.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. An outer flowpath ducting and front frame system in a turbofan engine comprising a fan containment structure (314), the engine outer flowpath ducting and front frame system comprising:
a load housing comprising a primary composite load path (316) circumferentially surrounding an engine centerline (300), extending from substantially an inlet inner barrel (302) of the turbofan engine to an aft bypass (310) of the turbofan engine, and defining the outer bypass flowpath (338);
a secondary composite load path (326) coupled to the primary composite load path (316) and extending substantially from a forward side of the fan containment structure to the aft bypass (310), wherein the fan containment structure is in between the secondary composite load path (326) and the primary composite load path (316); and
a circular front frame assembly coupled to the load housing, comprising:
i) a metallic hub (500);
ii) a first number of aerodynamically determined composite fairings (402) coupled to the metallic hub (500) and extending radially from the metallic hub to the primary composite load path; and
iii) a first number of load-bearing metal struts (340,702), each load-bearing metal strut coupled on a first end (706) to the metallic hub (500) and coupled on the second end (702) to the primary composite load path (316).

2. The outer flowpath ducting and front frame system of Claim 1, wherein the primary composite load path is continuous from substantially the inlet inner barrel to the aft bypass region.

3. The outer flowpath ducting and front frame system of Claim 1, wherein each fairing in the front frame assembly is substantially hollow and one load-bearing metallic strut is positioned within the hollow of each fairing.

4. The outer flowpath ducting and front frame system of Claim 1, wherein the second end (704) of each strut comprises a fastening head (708).

5. The outer flowpath ducting and front frame system of Claim 4, wherein the load housing further comprises:
a first number of openings (322), each opening oriented to receive a second end (704) of a strut; and
a first number of mount pads (324) coupled to the primary composite load path, each mount pad oriented around one of the openings and configured to couple an associated strut to the primary composite load path.

6. The outer flowpath ducting and front frame system of Claim 1, wherein the secondary composite load path comprises:
a first segment extending substantially from a forward side of the fan containment structure (328) to a forward side of a mount pad (330); and
a second segment extending substantially from an aft side of the mount pad (322) to the aft bypass region (334).

7. A method for reducing turbofan engine weight in a turbofan engine having outer flowpath ducting, the turbofan engine comprising a fan containment structure (314), the method comprising:
defining the outer flowpath ducting by a load housing that circumferentially surrounds an engine centerline with a continuous primary composite load path (316) extending from substantially an inlet inner barrel (302) of the turbofan engine to an aft bypass region (310) of the turbofan engine;
coupling a secondary composite load path (326) to the primary composite load path (316), the secondary composite load path (326) extending substantially from a forward side of the fan containment structure to the aft bypass (310) region, such that the fan containment structure is in between the secondary composite load path (326) and the primary composite load path (316);
detachably coupling a front frame assembly to the load housing, the front frame assembly comprising a metallic hub (500);
coupling a plurality of aerodynamically determined composite fairings (402) to the metallic hub (500) and extending the composite fairings (402) radially to the primary composite load path;
positioning a plurality of load-bearing metal struts (702) between the primary composite load path and the metallic hub;
coupling the load-bearing metal struts to the primary composite load path.

8. The method of Claim 7, further comprising:
creating, in the primary composite load path, a first number of openings, each opening oriented to receive a metal strut; and
coupling the load-bearing metal struts to mount pads that are coupled to the primary composite load path.

## Patentansprüche

1. Außenströmungswegkanal- und Vorderrahmensystem in einem Mantelstrom-Triebwerk mit einer Bläsereinhausungsstruktur (314), wobei das Außenströmungswegkanal- und Vorderrahmensystem des Triebwerks umfasst:
ein Lastgehäuse mit einem primären Verbundlastweg (316), der eine Triebwerkmittellinie (300) in Umfangsrichtung umgibt, sich im Wesentlichen von einem inneren Einlasslauf (302) des Mantelstrom-Triebwerks zu einem hinteren Nebenweg (310) des Mantelstrom-Triebwerks erstreckt und den äußeren Nebenströmungsweg (338) definiert;
einen sekundären Verbundlastweg (326), der mit dem primären Verbundlastweg (316) gekoppelt ist und sich im Wesentlichen von einer vorderen Seite der Bläsereinhausungsstruktur zum hinteren Nebenweg (310) erstreckt, wobei sich die Bläsereinhausungsstruktur zwischen dem sekundären Verbundlastweg (326) und dem primären Verbundlastweg (316) befindet; und
eine kreisförmige Vorderrahmenanordnung, die mit dem Lastgehäuse gekoppelt ist, umfassend:
i) eine Metallnabe (500);
ii) eine erste Anzahl von aerodynamisch bestimmten Verbundverkleidungen (402), die mit der Metallnabe (500) gekoppelt sind und sich radial von der Metallnabe zum primären Verbundlastweg erstrecken; und
iii) eine erste Anzahl von tragenden Metallstreben (340, 702), wobei jede tragende Metallstrebe an einem ersten Ende (706) mit der Metallnabe (500) und am zweiten Ende (702) mit dem primären Verbundlastweg (316) gekoppelt ist.

2. Außenströmungswegkanal- und Vorderrahmensystem nach Anspruch 1, wobei der primäre Verbundlastweg von im Wesentlichen dem inneren Einlasslauf zum hinteren Nebenwegbereich durchgehend ist.

3. Außenströmungswegkanal- und Vorderrahmensystem nach Anspruch 1, wobei jede Verkleidung in der Vorderrahmenanordnung im Wesentlichen hohl ist und eine tragende Metallstrebe im Hohlraum jeder Verkleidung positioniert ist.

4. Außenströmungswegkanal- und Vorderrahmensystem nach Anspruch 1, wobei das zweite Ende (704) jeder Strebe einen Befestigungskopf (708) umfasst.

5. Außenströmungswegkanal- und Vorderrahmensystem nach Anspruch 4, wobei das Lastgehäuse ferner umfasst:
eine erste Anzahl von Öffnungen (322), wobei jede Öffnung so ausgerichtet ist, dass sie ein zweites Ende (704) einer Strebe aufnimmt; und
eine erste Anzahl von Befestigungsplatten (324), die mit dem primären Verbundlastweg gekoppelt sind, wobei jede Befestigungsplatte um eine der Öffnungen herum ausgerichtet und konfiguriert ist, um eine zugeordnete Strebe mit dem primären Verbundlastweg zu koppeln.

6. Außenströmungswegkanal- und Vorderrahmensystem nach Anspruch 1, wobei der sekundäre Verbundlastweg umfasst:
ein erstes Segment, das sich im Wesentlichen von einer vorderen Seite der Bläsereinhausungsstruktur (328) zu einer vorderen Seite einer Befestigungsplatte (330) erstreckt; und
ein zweites Segment, das sich im Wesentlichen von einer hinteren Seite der Befestigungsplatte (322) zum hinteren Nebenwegbereich (334) erstreckt.

7. Verfahren zum Reduzieren des Gewichts eines Mantelstrom-Triebwerks in einem Mantelstrom-Triebwerk mit einem Außenströmungswegkanal, wobei das Mantelstrom-Triebwerk eine Bläsereinhausungsstruktur (314) umfasst, wobei das Verfahren umfasst:
Definieren des Außenströmungswegkanals durch ein Lastgehäuse, das eine Triebwerkmittellinie in Umfangsrichtung umgibt, mit einem kontinuierlichen primären Verbundlastweg (316), der sich im Wesentlichen von einem inneren Einlasslauf (302) des Mantelstrom-Triebwerks zu einem hinteren Nebenwegbereich (310) des Mantelstrom-Triebwerks erstreckt;
Koppeln eines sekundären Verbundlastwegs (326) mit dem primären Verbundlastweg (316), wobei sich der sekundäre Verbundlastweg (326) im Wesentlichen von einer vorderen Seite der Bläsereinhausungsstruktur zum hinteren Nebenwegbereich (310) erstreckt, so dass sich die Bläsereinhausungsstruktur zwischen dem sekundären Verbundlastweg (326) und dem primären Verbundlastweg (316) befindet;
lösbares Koppeln einer Vorderrahmenanordnung mit dem Lastgehäuse, wobei die Vorderrahmenanordnung eine Metallnabe (500) umfasst;
Koppeln einer Vielzahl aerodynamisch bestimmter Verbundverkleidungen (402) mit der Metallnabe (500) und Erstrecken der Verbundverkleidungen (402) radial zum primären Verbundlastweg;
Positionieren einer Vielzahl tragender Metallstreben (702) zwischen dem primären Verbundlastweg und der Metallnabe;
Koppeln der tragenden Metallstreben mit dem primären Verbundlastweg.

8. Verfahren nach Anspruch 7, ferner umfassend:
Erzeugen einer ersten Anzahl von Öffnungen in dem primären Verbundlastweg, wobei jede Öffnung so ausgerichtet ist, dass sie eine Metallstrebe aufnimmt; und
Koppeln der tragenden Metallstreben an Montageplatten, die mit dem primären Verbundlastweg gekoppelt sind.

## Revendications

1. Conduite d'écoulement externe et un système de cadre avant dans un moteur à turboréacteur comprenant une structure de confinement de ventilateur (314), la conduite d'écoulement externe du moteur et le système de cadre avant comprenant :
un boîtier de charge comprenant un trajet de charge composite principal (316) entourant circonférentiellement une ligne centrale de moteur (300) s'étendant sensiblement d'un cylindre interne d'entrée (302) du moteur à turboréacteur vers une dérivation arrière (310) du moteur à turboréacteur et définissant la conduite d'écoulement de dérivation externe (338) ;
un trajet de charge composite secondaire (326) couplé au trajet de charge composite principal (316) et s'étendant sensiblement d'un côté avant de la structure de confinement de ventilateur jusqu'à la dérivation arrière (310), dans laquelle la structure de confinement de ventilateur se trouve entre le trajet de charge composite secondaire (326) et le trajet de charge composite principal (316) ; et
un ensemble de cadre avant circulaire couplé au boîtier de charge, comprenant :
i) un moyeu métallique (500) ;
ii) un premier nombre de carénages composites déterminés aérodynamiquement (402) couplés au moyeu métallique (500) et s'étendant radialement du moyeu métallique au trajet de charge composite principal ; et
iii) un premier nombre d'entretoises métalliques porteuses (340, 702), chaque entretoise métallique porteuse étant couplée, sur une première extrémité (706), au moyeu métallique (500) et couplée, sur la seconde extrémité (702), au trajet de charge composite principal (316).

2. Conduite d'écoulement externe et système de cadre avant selon la revendication 1, dans laquelle le trajet de charge composite principal est continu, depuis sensiblement le cylindre interne d'entrée jusqu'à la région de dérivation arrière.

3. Conduite d'écoulement externe et système de cadre avant selon la revendication 1, dans laquelle chaque carénage de l'ensemble de cadre avant est sensiblement creux et une entretoise métallique porteuse est positionnée à l'intérieur du creux de chaque carénage.

4. Conduite d'écoulement externe et système de cadre avant selon la revendication 1, dans laquelle la seconde extrémité (704) de chaque entretoise comprend une tête de fixation (708).

5. Conduite d'écoulement externe et système de cadre avant selon la revendication 4, dans laquelle le boîtier de charge comprend en outre :
un premier nombre d'ouvertures (322), chaque ouverture étant orientée pour recevoir une seconde extrémité (704) d'une entretoise ; et
un premier nombre de plots de montage (324) couplés au trajet de charge composite principal, chaque plot de montage étant orienté autour de l'une des ouvertures et conçu pour se coupler à une entretoise associée au trajet de charge composite principal.

6. Conduite d'écoulement externe et système de cadre avant selon la revendication 1, dans laquelle le trajet de charge composite secondaire comprend :
un premier segment s'étendant sensiblement d'un côté avant de la structure de confinement de ventilateur (328) à un côté avant d'un plot de montage (330) ; et
un second segment s'étendant sensiblement d'un côté arrière du plot de montage (322) à la région de dérivation arrière (334).

7. Procédé pour réduire le poids d'un moteur à turboréacteur dans un moteur à turboréacteur comportant une conduite d'écoulement externe, le moteur à turboréacteur comprenant une structure de confinement de ventilateur (314), le procédé comprenant :
la définition de la conduite d'écoulement externe par un boîtier de charge qui entoure circonférentiellement une ligne centrale de moteur avec un trajet de charge composite principal continu (316) s'étendant sensiblement d'un cylindre interne d'entrée (302) du moteur à turboréacteur à une région de dérivation arrière (310) du moteur à turboréacteur ;
le couplage d'un trajet de charge composite secondaire (326) au trajet de charge composite principal (316), le trajet de charge composite secondaire (326) s'étendant sensiblement d'un côté avant de la structure de confinement de ventilateur à la région de dérivation arrière (310), de sorte que la structure de confinement de ventilateur se trouve entre le trajet de charge composite secondaire (326) et le trajet de charge composite principal (316) ;
le couplage de manière amovible d'un ensemble de cadre avant au boîtier de charge, l'ensemble de cadre avant comprenant un moyeu métallique (500) ;
le couplage d'une pluralité de carénages composites déterminés aérodynamiquement (402) au moyeu métallique (500) et étendant les carénages composites (402) radialement au trajet de charge composite principal ;
le positionnement d'une pluralité d'entretoises métalliques porteuses (702) entre le trajet de charge composite principal et le moyeu métallique ;
le couplage des entretoises métalliques porteuses au trajet de charge composite principal.

8. Procédé selon la revendication 7, comprenant en outre :
la création, dans le trajet de charge composite principal, d'un premier nombre d'ouvertures, chaque ouverture étant orientée pour recevoir une entretoise métallique ; et
le couplage des entretoises métalliques porteuses aux plots de montage qui sont couplés au trajet de charge composite principal.
